# EUROPEAN PATENT SPECIFICATION

(11) **EP 2 412 551 B1**
(45) Date of publication and mention of the grant of the patent: **21.12.2016**
(21) Application number: 10170973.1
(22) Date of filing: 27.07.2010
(51) Int. Cl.: B60J 7/06

(54) **Anti-lifting system for a canvas**
Abhebesicherung für Abdeckplanen
Système anti-relevage pour bâche

(43) Date of publication of application: 01.02.2012
(73) Proprietor: Marcolin S.r.l., 33170 Pordenone (IT)
(72) Inventor: Amato, Davide, 33170 Pordenone (IT)
(74) Representative: Citron, Massimiliano

(56) References cited:
- EP-A1- 2 218 602
- EP-A1- 2 233 335
- WO-A1-99/12759
- DE-A1- 19 839 820
- US-A1- 2007 085 369

## Description

The invention refers to an anti-lift system for a canvas supported by centerings capable of sliding on the upper edge of an open top body. The body may for example belong to a vehicle, like a lorry, or it may be a stationary ground container.

Document EP 2233335 A1 discloses a system according to the preamble of claim 1. We shall use the field of transport lorries as an example.

In certain models, a canvas is used to close the side of the loading area. The canvas gets fixed to the truck frame so as to prevent it from lifting whilst moving. EP 0 859 930 and EP 1 588 883 show belt or hook systems for fastening the canvas to the edge of the loading plane.

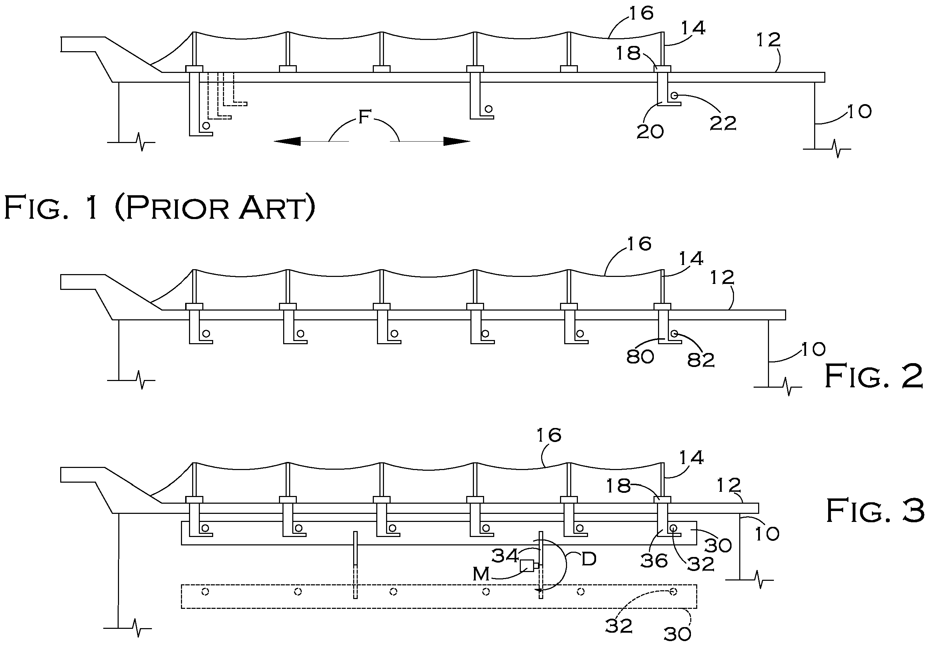

In other cases (see Fig. 1) the lorry has a rigid open top body 10, with a canvas 16 that is only used to cover the upper opening. The canvas 16 is mounted on centerings 14 that can slide on the upper edge 12 of the body 10 through skids 18, so that the canvas 16 can be opened out or packed on the short side of the body 10 near to the driver's cabin.

In order to prevent the opened-out canvas 16 from lifting whilst moving, a rigid locking arm 20, usually L-shaped, adapted for engaging with a corresponding fixed anchoring element 22 present on the side wall of the body 10, is mounted on some centerings 14. The element 22 is usually a bracket or a ring permanently screwed to the body 10.

In all the figures only some components have reference numerals due to the repetitivity of the structure; and identical reference numerals indicate identical elements.

When the canvas 16 is opened out, the arm 20 and the anchoring element 22 are in a relative position so that the arm 20 is held by the anchoring element 22 in a vertical direction. The arm 20 is thus prevented from moving upwards and the relative centering 14 remains anchored to the body 10.

The elements 22 are arranged at different heights so as to allow the arms 20 to translate horizontally (see arrow F) without being an obstacle to them when they are grouped to pack the canvas 16 (see arms 20 brought together represented with broken line). Consequently, the arms 20 have lengths that decrease towards the movable side of the canvas 16.

Since the arms 20 cannot be made too long due to the fact that the hooking end could miss the corresponding element 22 due to accidental vibrations or deformations, there is a limit to the total number of brackets that can be used. Therefore, only some (few) centerings 14 can be locked onto the body 10, with safety and stability problems for the canvas 16. Other drawbacks are the fact that it is necessary to be precise when mounting the arms 20 and the elements 22, and that different models of arms 20 must be manufactured.

US 2007/0085369 describes a retractable cover for tarping systems to be used on a flat bed trailer, where they slidingly supported. To to prevent folding or aging slackening to the tarpaulin a solution is proposed to use a U-shaped bow supported by compression springs.

The main object of the invention is to make a system of the aforementioned type that improves the stability and safety of the opened-out canvas. Another object is to have pieces that are as much as possible standardised. Another object is to increase the anchoring points for the centerings.

Such objects are obtained with an anti-lift system comprising means that act upon a centering to anchor it to the body when it is in the second position, where the means have a configuration for fixedly connecting the centering and a modified configuration for not being an obstacle to the movement of the centerings towards the second position.

Thanks to the fact that said means can be reconfigured, modified or change state to eliminate any obstacle to the horizontal stroke of the centerings, the system no longer has structural or design constraints. It is therefore possible to choose, for example, a variant that is cost-effective, optimal and has fewer components.

Said means may be for example mechanical and/or with action at a distance, for example electromagnets mounted on the skids and controlled electronically to attract the edge of the body and to anchor a centering to it.

For the mechanical variants, it is possible to have a locking arm mounted on a centering adapted for preventing it from moving upwards through the engagement (for example hooking) with an anchoring element to the body. The arm and/or the anchoring element has a variable configuration so as to be able to selectively accomplish such a reciprocal engagement.

By configuration we mean, for example, the structure and/or the arrangement of the parts, and/or the position and/or shape and/or spatial distribution of the components, or the electrical or chemical state.

By selective reciprocal engagement we mean that the anchoring element and the arm can be adjusted or controlled to cooperate with one another so as to lock the centering to the body, or to be unrestrained and allow the canvas to be packed.

According to the invention, the structure and/or position of an arm and/or of the corresponding anchoring element are no longer fixed, but variable and/or adjustable. Consequently, the restriction concerning the scarcity and/or the fixedness of the anchoring on the body is overcome, and any centering can be anchored to the body. For example, the arm and/or the anchoring element may comprise a movable member adapted for accomplishing the reciprocal engagement.

The anchoring element is preferably present on the side wall of the body, but it may also be for example on the upper edge of the body, so as to make a hooking directly onto the skids of the centerings and/or the centerings themselves. For example, such an edge could have some seats or hooks or surface anchoring elements. From the seats, retractable hooks may come out, adapted for locking a skid, or the anchoring elements may selectively be engaged by a hook or arm movably mounted on the skid or centering.

What substantially matters is the non-permanent and selective fixing of the centerings to the body, not where this occurs.

If it is the arm that has a variable configuration, it can comprise a mobile member suitable for moving between a position in which it is held by the anchoring element and another in which it is not. In turn, the arm may or may not be mobile with respect to its own centering.

The immediate advantage is that the positions of the anchoring elements are no longer imposed by the structure of the arms, but can advantageously be selected. For example, the anchoring elements may be arranged on the body substantially at the same height, simplifying the overall structure and the assembly, and may allow that the arms all have the same length. The advantages of having fewer pieces in the warehouse are obvious.

If even or only the anchoring element has a variable configuration, a preferred constructive choice is for it to be movable with respect to the body. This makes the system very advantageous if the arms are made for example like the known and simple L-shaped brackets, but this time all identical. It is sufficient to open out the canvas and move, before or after, the anchoring elements to the point in which they can hold the arms, and then remove them or move them to another place where they do not form an obstacle when the canvas is to be packed. Therefore, there are many degrees of freedom in the design of the system that make it possible to optimise it, one of which is the number of anchored centerings.

The anchoring element may advantageously have a collapsible structure so as to flatten against the surface of the body, for example the side one or the one of the upper edge. The idea is to free space and/or remove its bulk so that the movement of the arm occurs undisturbed without impacts.

In general, the anchoring element may be connected to the body in many ways. For example, it may be rotatable with respect to the body, with the rotation axis substantially perpendicular to a wall, for example the side one, of the body (for example a ring or slot that is orientable to offer a hook to an arm or to move away from the arm allowing it to slide freely). Or the rotation axis may be vertical and/or in general roughly parallel to the side wall of the body.

With vertical axis it is particularly advantageous for the anchoring element to comprise an element (for example elongated like a pin) hinged to the body at one end, so as to be able to be arranged roughly perpendicular or parallel to the surface of the body. In general, there can be an anchoring for an arm that projects from the surface of the body, whereas it leaves it freedom to move when it is bent. An elongated element, for example a movable pin that projects just enough so as to be hooked by the arm, is sufficient and very cost-effective. To facilitate the temporary connection it is preferable that the hinged element projects from the surface of the body sufficiently for being hooked by the arm, Both the movable parts of the arm and those of the anchoring element may comprise elastic means (for example springs or elastic elements like rubber cables or bent plates) to elastically bring back one or more movable parts (operating to obtain said reciprocal engagement) to a resting configuration. In this way, the system is simplified and does not require mechanical actuation systems.

Or there may be actuators (for example linear or rotary) to move said one or more movable parts of the arm and/or of the anchoring element in a controlled manner. Although the increased complexity, there is greater operating reliability, and more importantly, the mechanisms that can be obtained are safer, stronger and more precise.

Further examples of means with at least two different configurations which can be exploited according to the invention in the arm and/or in the anchoring element are bellow, pantograph or telescopic mechanisms, inflatable parts or pincer or clamp members.

Further characteristics and advantages of the invention shall become clearer from the following description given as an example of an anti-lift system, together with the attached drawing, in which:
figure 1 shows a known anti-lift system;
figure 2 schematically shows an anti-lift system according to the invention;
figures 3-7 show variants of the system of fig. 2;
figure 8 shows the system of figure 2 in detail in a 3D view;
figure 9 shows an enlarged view of the circle MC represented with broken line in fig. 8;
figure 10 shows a component of the system of fig. 2.

The system of fig. 2 still has centerings 14 that can slide on the upper edge 12 of the body 10. The centerings, for example, can be shifted with cable loops, like in EP 2075149.

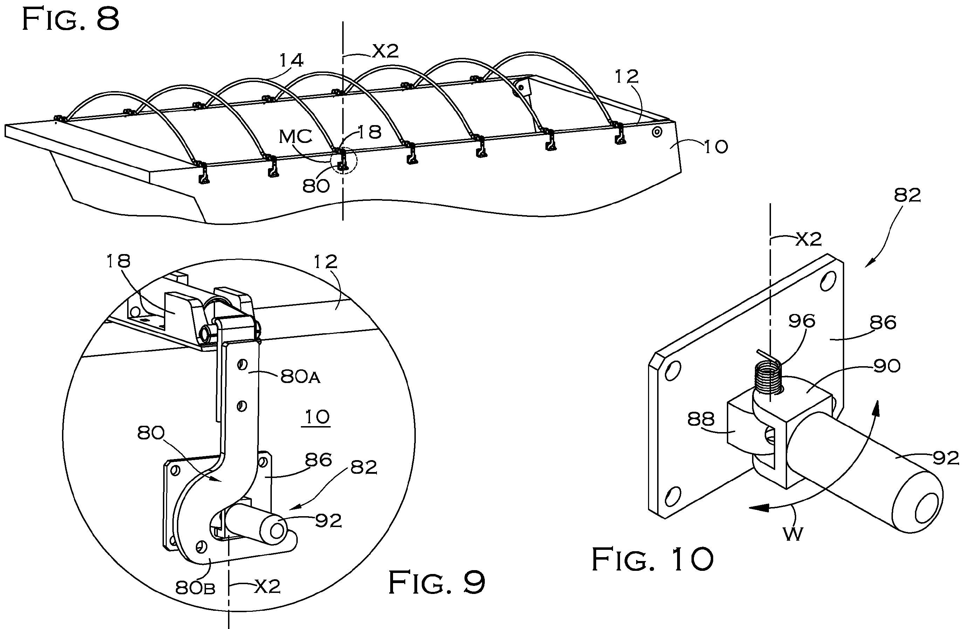

A hook-shaped arm 80, adapted for hooking onto an anchoring element 82 (see figures 8-10) is fixed to the skids 18 of the centerings 14. There are preferably as many arms 80 as there are elements 82.

It should be noted that an advantageous characteristic of the system in fig. 2 is the constancy of the shape of the arm 80, of the structure of the elements 82 and of the distances of the elements 82 from the ground or from the edge 12. The elements 82 are all on a horizontal line. Since it is easier to produce pieces that are the same and to assemble them at regular intervals, the system is not very expensive and involves less onerous stocks than in the prior art.

The arm 80 extends cantilevered downwards from the skid 18 (fig. 9). The arm 80 has a rectilinear portion 80a and a roughly U- or C-shaped portion 80b that forms a seat or recess.

The element 82 (fig. 10) comprises a fixing plate 86, for example screwable or weldable to the side wall of the body 10, that has a projecting nose 88. A movable member, formed by a fork portion 90, which is rotatably coupled with the nose 88, and a stem or pin 92, is rotatably hinged on the nose 88, around an axis X2 that is vertical and parallel to the side wall of the body 10. A spring 96 pushing between the plate 86 and the stem 92 elastically maintains the latter perpendicular, like in fig. 10, to the plate 86 (and therefore to the side surface of the body 10). The stem 92 can rotate by 90° on two opposite sides so as to arrange itself roughly parallel to the plate 86 and then elastically return in position (arrow W). In brief, the pin 92 can be lowered whereas along the axis X2 it represents a fixed anchoring.

If during the movement of the canvas 16 the part 80b meets a stem 92, both on the recessed part and on the convex part, it pushes the pin 92, lowers it on the body 10 and goes past it. Then the pin 92 elastically returns where it was.

The pins 92 are fixed to the body 10 so as to offer an anchoring point at each arm 80 with the canvas 16 opened out (see figure 8). Every pin 92 is positioned so that it is in the seat of an arm 80, engaging its portion 80b and preventing by contrast the vertical lifting of the relative centering.

The very simple and cost-effective structure for obtaining a reconfigurable anchoring element should be noted.

In the variant of fig. 3, L- or catch-shaped hooks 36 are fixed to the skids 18. On the side surface of the body 10, there is a platform or support 30 on which there are anchoring elements 32 in the form for example of pins or pegs. Two connecting rods 34 have an end hinged onto the body 10 and the other one on the platform 30, that is thus movable on the body 10. In particular the platform 30 can rest in two positions at a different height, controllable for example through the actuation of a motor M that makes one of the connecting rods 34 rotate (see arrow D). When the platform 30 is in the upper position, the anchoring elements 32 are at a height such as to be reached by the hooks 36 and hold the canvas 16. In the lower position, in which the anchoring elements 32 are far-off and do not get in the way of the arms 36, the centerings 14 can come closer to one another.

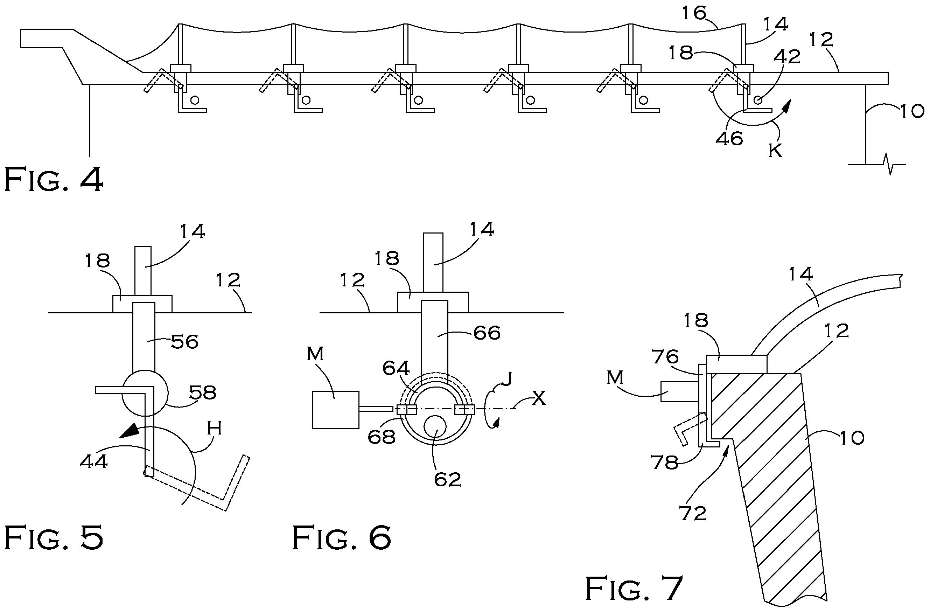

In the variant of fig. 4, some L- or catch-shaped movable hooks 46 are fixed to the skids 18. The hooks 46 are rotatable in a vertical plane thanks for example to an autonomous motor aboard the centering 14 or a bar (not shown) that connects them all and is actuated by an actuator mounted on the body 10 (not shown). On the side surface of the body 10 there is a series of anchoring elements 42 in the form of pins aligned horizontally. By actuating the motor (or the bar), all the hooks 46 can be brought under the anchoring elements 42, and be locked by them, or they can lift away from them, allowing the centerings 14 to move freely (see arrow K).

In the variant of figure 5, a hook/anchoring connection is shown in which this time the anchoring element is equipped with a movable part. Some hooks 56 with a slot or ring 58 are fixed to the skids 18. The anchoring elements comprise a movable L- or catch-shaped hook 44 which is rotatable in a vertical plane thanks for example to an autonomous motor or actuator mounted onto the body 10 (not shown). By actuating the motor, the hooks 44 can be lifted and engage the ring 58 (see arrow H), so as to lock the hook 56, or be lowered coming off from the ring 58, and allowing the centerings 14 to move freely.

In the variant of fig. 6, some vertical arms 66 are fixed to the skids 18, said arms having a bracket 64 (for example semicircular) at the ends, to which a movable member 68 (for example semicircular-shaped) is rotatably connected. The member 68 is rotatable around a horizontal axis X thanks for example to an autonomous motor or actuator M. On the side of the body 10 there is a series of anchoring elements 62 in the form of fixed pins aligned horizontally. By actuating the motor M, the member 68 can be lowered to complete a surrounding of the anchoring element 62, and to lock the centering 14, or the member 68 can be lifted to unconstrain the arm 66 from the anchoring element 62 and leave the centering 14 free to move (see arrow J). The motor M may be mounted on a centering or on the body, dynamically connecting to the hooking mechanism only in the anchoring position for the arms 66. The shape of the member 68 may vary, since it is the surrounding of the anchoring element that is important.

In the variant of Fig. 7, some vertical arms 76 are fixed to the skids 18 of the centerings 14, the arms 76 having a hook 78 at the ends, for example L-shaped, rotatably connected and with adjustable position,. The wall of the body 10 has a longitudinal undercut 72 (or also holes or seats). The hook 78 is rotatable around a horizontal axis thanks, for example, to an autonomous motor M mounted on the arm 76.

By actuating the motor or actuator M the hook 78 can be lowered to hook the centering 14 to the body 10. When the hook 78 is lifted, the centering can move freely, or with less friction, horizontally on the edge 12.

## Claims

1. Anti-lift system for a canvas (16) covering an open-top body (10) which defines an upper opening, with centerings (14) adapted for supporting the canvas and able to slide on skids (18) above the upper edge (12) of the body's opening between
- a first position in which the canvas covers the open-top body (10) and
- a second position in which the canvas is folded;
the system comprising non-permanent fixing means (80, 82) that act upon a centering (14) to anchor it to the open-top body (10)
only when it is in
the first position,
**characterised in that**
the means have a configuration wherein they fixedly connect the centering (14) only when the latter is in the first position, and
a modified configuration wherein they are not an obstacle to the movement of the centerings (14) toward the second position, the means comprising an anchoring element (82) and
a blocking arm (80) mounted on a centering (14)
adapted for preventing it from moving upwards in the first position through engagement with the anchoring element (82) to the open-top body (10), where
the arm (80) and/or the anchoring element (82)
has a variable configuration for
selectively accomplishing the engagement.

2. System according to claim 1, wherein the arm and/or the anchoring element comprises a movable member (56, 68, 78, 92) adapted for accomplishing the reciprocal engagement.

3. System according to claim 2, wherein the arm comprises a movable member (56, 68, 78) adapted for moving between a position in which it is held by the anchoring element and another position in which it is not.

4. System according to claims 1 to 3, wherein the anchoring element (32, 82) is movable with respect to the body.

5. System according to one of the previous claims 1 to 4, wherein the anchoring element (82) has a collapsible structure so as to flatten against the surface of the body and free up space for the arm (80) to move.

6. System according to one of the previous claims 1 to 5, wherein the anchoring element (82) is rotatable with respect to the body.

7. System according to claim 6, wherein the anchoring element (82) is rotatable with respect to the body with a rotation axis (X2) which is vertical and roughly parallel to the surface of the body.

8. System according to claim 7 or 6, wherein the anchoring element is rotatable with respect to the body with a rotation axis substantially perpendicular to the surface of the body.

9. System according to claim 8, wherein the anchoring element (82) comprises an element (92) hinged to the body at one end, so as to be able to be arranged either parallel or roughly perpendicular with respect to a side wall of the body, so as to project from it and to be hooked by the arm.

10. System according to any one of the previous claims 1 to 9, comprising elastic means (96) for elastically bringing back one or more movable parts of the arm and/or of the anchoring element to a resting configuratior

11. System according to claim 7 and 10, comprising a spring (96) acting upon the hinged element to bring it back perpendicular to the surface of the body.

12. System according to any one of the previous claims 1 to 11, comprising actuation means (M) for moving one or more movable parts of the arm and/or of the anchoring element in a controlled manner.

13. System according to any one of the previous claims, comprising a plurality of said anchoring elements (82) arranged on the body substantially at the same height.

14. System according to any one of the previous claims, comprising a plurality of arms (80) all having equal length from the centerings to anchoring elements.

## Patentansprüche

1. Abhebesicherungssystem für eine Plane (16) zum Abdecken einer offenen Pritsche (10) mit einer oberen Öffnung mit geeigneten Spriegeln (14), um die Plane und Schiebeelemente auf Führungen (18) über dem oberen Rand (12) der Pritschenöffnung zwischen
- einer ersten Position zu tragen, in welcher die Plane die offene Pritsche (10) abdeckt, und
- einer zweiten Position, in welcher die Plane zusammengelegt ist,
das System umfasst Befestigungsvorrichtungen (80, 82), die an einer Spriegel (14) wirken, um sie an der offenen Prietsche (10) nur zu befestigen, wenn sie in der ersten Position ist,
**dadurch gekennzeichnet, dass**
die Vorrichtungen eine Anordnung haben, wobei sie eine Spriegel (14) nur dann fixieren, wenn diese letztere in der ersten Position ist, und
eine geänderte Anordnung haben, wobei sie kein Hindernis beim Verschieben der Spriegel (14) zur zweiten Position darstellen,
die Vorrichtungen umfassen ein Befestigungselement (82) und einen Verriegelungsarm (80), der auf einer geeigneten Spriegel befestigt ist, um ein Verschieben nach oben in die erste Position durch Einsatz des Befestigungselements (82) an der offenen Prietsche (10) zu verhindern,
wobei der Arm (80) und/oder das Befestigungselement (82) eine veränderliche Anordnung haben, um selektiv den Einsatz durchführen zu können.

2. System nach Anspruch 1, wobei der Arm und/oder das Befestigungselement eine geeignete bewegliche Vorrichtung (56, 68, 78, 92) umfassen, um den gegenseitigen Einsatz zu gewährleisten.

3. System nach Anspruch 2, wobei der Arm eine geeignete bewegliche Vorrichtung (56, 68, 78) umfasst, um sich zwischen einer Position zu bewegen, in welcher es vom Befestigungselement gehalten wird, und einer anderen Position, in der es dies nicht ist.

4. System nach den Ansprüchen von 1 bis 3, in denen das Befestigungselement (32, 82) gegenüber der Pritsche beweglich ist.

5. System nach einem der vorhergehenden Ansprüche von 1 bis 4, in welchem das Befestigungselement (82) eine zusammenklappbare Struktur hat, um sich auf der Oberfläche von der Pritsche flach zu machen und Platz frei zu geben, um den Arm (80) zu bewegen.

6. System nach einem der vorhergehenden Ansprüche 1 bis 5, in dem das Befestigungselement (82) zur Pritsche drehbar ist.

7. System nach Anspruch 6, in dem das Befestigungselement (82) zur Pritsche mit einer Drehachse drehbar ist, welche vertikal (X2) und etwa parallel zur Oberfläche der Pritsche ist.

8. System nach Anspruch 7 oder 6, in dem das Befestigungselement gegenüber der Pritsche mit einer grundsätzlich zur Oberfläche der Pritsche senkrechten Drehachse drehbar ist.

9. System nach Anspruch 8, in welchem das Befestigungselement (82) ein Element (92) umfasst, das an einem Ende an der Pritsche angelenkt ist, so dass es parallel oder senkrecht zu einer Seitenwand der Pritsche angeordnet werden kann, um heraus zu ragen und vom Arm befestigt zu werden.

10. System nach einem der vorhergehenden Ansprüche von 1 bis 9, bestehend aus elastischen Vorrichtungen (96), um elastisch ein oder mehr bewegliche Teile des Arms und/oder Befestigungselements in eine Ruheposition zu bringen.

11. System nach Anspruch 7 und 10, bestehend aus einer Feder (96), die auf das angelenkte Element wirkt, um es senkrecht zur Oberfläche der Pritsche zurück zu bringen.

12. System nach einem der vorhergehenden Ansprüche 1 bis 11, bestehend aus Aktoren (M), um ein oder mehrere bewegliche Teile des Arms und/oder des Befestigungselements kontrolliert zu bewegen.

13. System nach einem der vorhergehenden Ansprüche, bestehend aus einer Vielzahl besagter Befestigungselemente (82), die an der Pritsche grundsätzlich auf gleicher Höhe angeordnet sind.

14. System nach einem der vorhergehenden Ansprüche, bestehend aus einer Vielzahl besagter Arme (80), die alle die gleiche Länge von der Spriegel zu den Befestigungselementen haben.

## Revendications

1. Système anti-soulèvement destiné à la bâche (16) de couverture d'une benne (10) à ciel ouvert **caractérisée par** une ouverture supérieure, comportant des arceaux (14) qui sont aménagés pour supporter la bâche et qui coulissent sur des patins (18) situés sur le bord supérieur (12) de l'ouverture de la benne entre
- une première position dans laquelle la bâche couvre la benne à ciel ouvert (10) et
- une deuxième position dans laquelle la bâche est repliée,
le système comprenant des moyens de fixation non permanente (80, 82) qui agissent sur un arceau (14) pour l'ancrer à la benne à ciel ouvert (10) uniquement lorsque celui-ci se trouve dans la première position,
**caractérisé par le fait que**
ces moyens possèdent une configuration dans laquelle ils entravent un arceau (14) uniquement lorsque ce dernier se trouve dans la première position, et
une configuration modifiée dans laquelle ils ne font plus obstacle au déplacement des arceaux (14) vers la deuxième position,
les moyens en question comprenant un élément d'ancrage (82) et un bras de blocage (80) monté sur un arceau, en mesure d'empêcher un déplacement de ce dernier vers le haut dans la première position en impliquant l'élément d'ancrage (82) à la benne à ciel ouvert (10),
et où le bras (80) et/ou l'élément d'ancrage (82) ont une configuration variable afin de pouvoir procéder à leur implication de manière sélective.

2. Système selon la revendication 1, dans lequel le bras et/ou l'élément d'ancrage comprend un organe mobile (56, 68, 78, 92) permettant de réaliser leur implication réciproque.

3. Système selon la revendication 2, dans lequel le bras comprend un organe mobile (56, 68, 78) en mesure de se déplacer entre une position dans laquelle il est retenu par l'élément d'ancrage et une autre position dans laquelle il ne l'est pas.

4. Système selon les revendications 1 à 3, dans lequel l'élément d'ancrage (32, 82) est mobile par rapport à la benne.

5. Système selon l'une quelconque des revendications précédentes 1 à 4, dans lequel l'élément d'ancrage (82) a une structure compressible, de manière à s'aplatir sur la surface de la benne et libérer de l'espace pour le déplacement du bras (80).

6. Système selon l'une quelconque des revendications précédentes 1 à 5, dans lequel l'élément d'ancrage (82) est pivotant par rapport à la benne.

7. Système selon la revendication 6, dans lequel l'élément d'ancrage (82) est pivotant par rapport à la benne selon un axe de rotation qui est vertical (X2) et presque parallèle à la surface de la benne.

8. Système selon la revendication 7 ou 6, dans lequel l'élément d'ancrage est pivotant par rapport à la benne selon un axe de rotation fondamentalement perpendiculaire à la surface de la benne.

9. Système selon la revendication 8, dans lequel l'élément d'ancrage (82) comprend un élément (92) articulé à une extrémité de la benne de telle sorte qu'il puisse se placer soit parallèlement, soit presque perpendiculairement par rapport à une paroi latérale de la benne, de façon à dépasser de celle-ci et pouvoir être accroché par le bras.

10. Système selon l'une quelconque des revendications précédentes 1 à 9, comprenant des moyens élastiques (96) pour ramener élastiquement une ou plusieurs parties mobiles du bras et/ou de l'élément d'ancrage dans une configuration de repos.

11. Système selon les revendications 7 et 10, comprenant un ressort (96) agissant sur l'élément articulé pour le ramener perpendiculairement à la surface de la benne.

12. Système selon l'une quelconque des revendications précédentes 1 à 11, comprenant des moyens d'actionnement (M) permettant de déplacer, de manière contrôlée, une ou plusieurs parties mobiles du bras et/ou de l'élément d'ancrage.

13. Système selon l'une quelconque des revendications précédentes, comprenant plusieurs éléments d'ancrage (82) fondamentalement disposés à la même hauteur sur la benne.

14. Système selon l'une quelconque des revendications précédentes, comprenant plusieurs bras (80) ayant tous la même longueur entre les arceaux et les éléments d'ancrage.
***
